# EUROPEAN PATENT APPLICATION

(11) **EP 1 357 240 A1**
(43) Date of publication of application: **29.10.2003**
(21) Application number: 03250067.0
(22) Date of filing: 03.01.2003
(51) Int. Cl.: E04G 21/04, F16L 43/00, F16L 27/08

(54) **Method and apparatus for a line concrete pumping system**

(30) Priority: 08.01.2002 US 346691 P; 11.12.2002 US 316714
(71) Applicant: Construction Forms, Inc., Port Washington, Wisconsin 53074 (US)
(72) Inventor: Lehnhardt, Gary D., Cedar Grove, Wisconsin 53013 (US)
(74) Representative: Carpenter, David

(57) **Abstract**

A modular system for adapting a boom concrete system into a line concrete pumping system utilizes a first substantially 90 degree elbow connected to the pump outlet so that the concrete flow is directed downwardly from the outlet. A second substantially 90 degree elbow is pivotally attached to the first elbow so that the concrete flow direction can be selectively positioned in a horizontal plane. The second elbow further includes a reduced diameter at its outermost end.

## Description

### CROSS REFERENCE TO RELATED APPLICATION

This application is based on Provisional U.S. Patent Application Serial No. 60/346,691 filed January 8, 2002.

### FIELD OF THE INVENTION

The present invention relates to concrete pumping systems and more particularly to the conversion of a boom pumping system into a line pumping system.

### BACKGROUND OF THE INVENTION

Typically, concrete is moved at constructions sites by a boom pumping system in which the concrete is pumped through a series of pipes that terminate in a delivery hose.

There are circumstances when it is desirable to transform the boom pumping system into a line pumping system in which the concrete is pumped in a horizontal plane.

In the past, boom pumping systems were transformed into line pumping systems by connecting a hose to the elbow or the end of the reducer. This system was difficult to set up and required partial disassembly of the boom system.

The present invention is directed to a method and apparatus for adapting a boom system into a line system.

It is an object of the present invention to provide a modular system that will transform a boom pumping system into a line pumping system.

It is a further object of the invention to provide a system that allows the concrete to be directed in any horizontal direction in a 360 degree rotation.

It is a further object of the invention to provide a modular system that can be utilized quickly and does not require any special tools.

### BRIEF SUMMARY OF THE INVENTION

A modular system for adapting a boom concrete pumping system into a line concrete pumping system includes a first elbow that replaces the tangent assembly at the concrete delivery outlet.

The invention further includes a second substantially 90 degree elbow having first and second ends that is pivotally attached by its first end to the second end of the first elbow so that the concrete flow direction can be selectively positioned in a horizontal plane.

The invention also includes a reduced diameter at the second end of the second elbow.

A method is provided for adapting a boom concrete pumping system of the type having a tangent assembly connected to a concrete delivering outlet to a line concrete pumping system. The method includes removing the tangent assembly from the outlet; attaching a first elbow having opposed first and second ends to the outlet so that the first elbow is directed downwardly from the outlet; pivotally attaching one end of a second elbow to the first elbow second end so that concrete flow can be positioned in a horizontal plane. The second elbow second end is provided with a reduced diameter relative to the first end.

The present invention thus provides a simple conversion system that changes a boom concrete pumping system into a line concrete pumping system.

Various other features, objects, and advantages of the invention will be made apparent from the following detailed description and the drawings.

### BRIEF DESCRIPTION OF THE DRAWINGS

The drawings illustrate the best mode currently contemplated of carrying out the present invention.

In the drawings:
Fig. 1 is a perspective view of a concrete line pumping system utilizing the present invention with the tangent assembly of a boom concrete pumping system removed;
Fig. 1A is a perspective view of a boom concrete pumping system utilizing the tangent assembly;
Fig. 2 is a perspective view of the line pumping system of Fig. 1 with the concrete flow direction at a proximately 90 degree angle to the concrete pump outlet;
Fig. 3 is a perspective view of the concrete pumping system of Fig. 1 with the concrete flow direction at a 180 degree angle to the concrete pump outlet;
Fig. 4 is a perspective view of the concrete line pumping system of Fig. 1 with the concrete flow direction substantially parallel to the concrete pump outlet; and
Fig. 5 is an exploded perspective view of the line pumping conversion assembly.

### DETAILED DESCRIPTION OF THE INVENTION

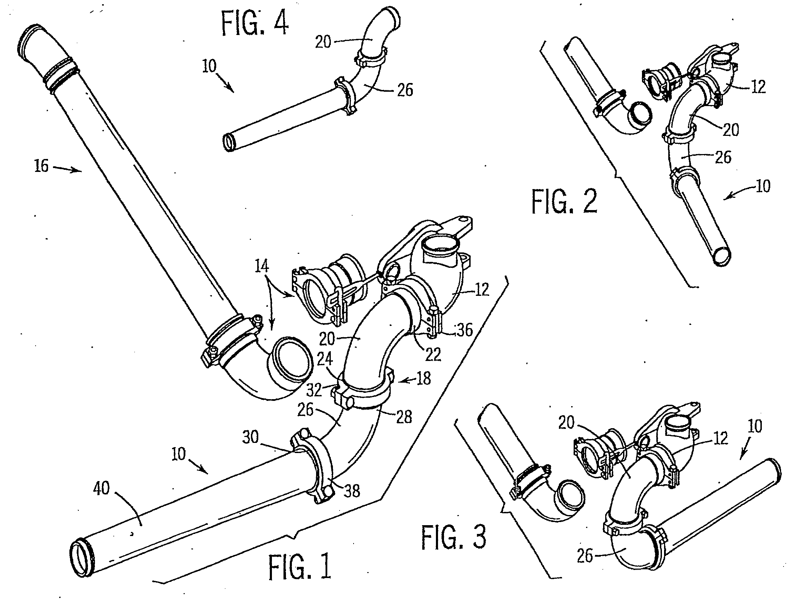

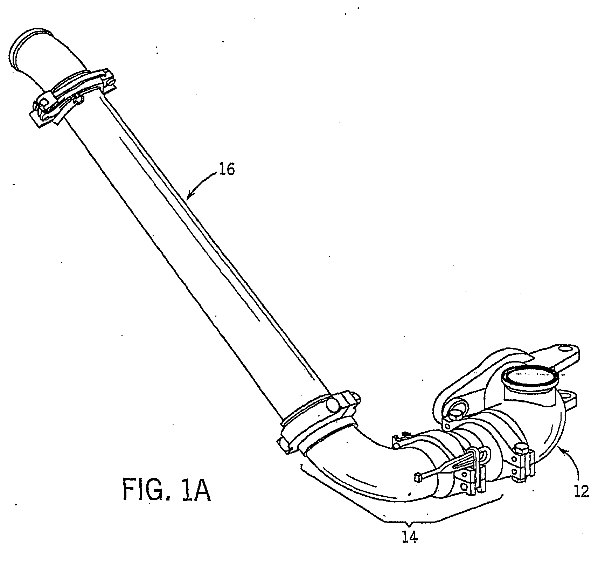

Fig. 1 illustrates a concrete line pumping system 10 connected to the outlet 12 of a concrete pump. Line system 10 replaces tangent assembly 14 that was utilized with boom concrete pumping system 16 as shown in Fig. 1A. The conversion from boom system 16 to line system 10 is made possible by converter assembly 18 that includes a first substantially 90 degree elbow 20 having a first end 22 and a second end 24.

A second substantially 90 degree elbow 26 has a first end 28 and a second end 30. First end 28 of second elbow 26 is pivotally connected to second end 24 of first elbow 20 by means of clamp 32.

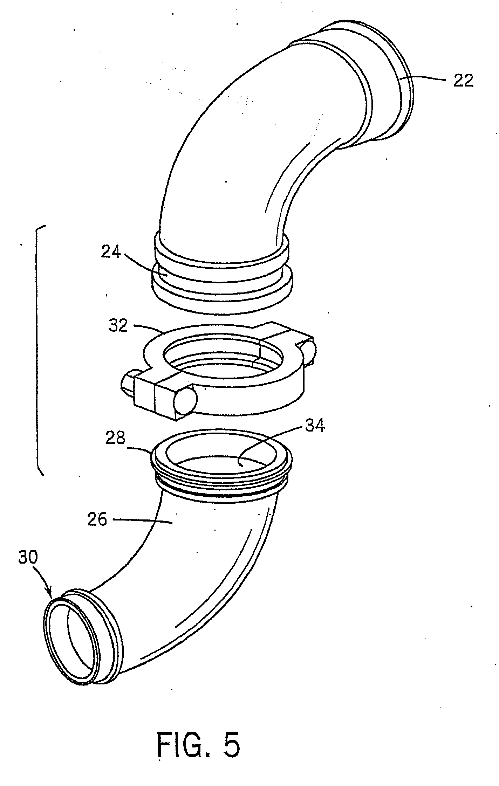

As seen in Fig. 5, second end 30 of second elbow 26 has a diameter smaller than that of first end 28. This diameter reduction is necessary for line pumping of concrete.

In order to convert the boom concrete pumping system 16 to the line concrete pumping system 10, the tangent assembly end 22 of first elbow 20 is non-rotatably attached by a clamp 36 to the outlet 12 so that the elbow 20 extends downwardly as seen in Fig. 1. Then, the second end 24 of first elbow 26 is pivotally connected by means of clamp 32 to the first end 28 of second elbow 26. The second or reduced end 30 of second elbow 26 can then be pivotally coupled by a clamp 38 to one end of an elongated pipe 40 joined to a source of concrete.

As seen in Figs. 2, 3 and 4, the adapter allows the flow of concrete be moved in horizontal plane in any direction. In Fig. 2, the flow of concrete is directed at approximately a 90 degree angle to the concrete pump outlet. Fig. 3 shows the concrete flow being reversed from the direction exiting the concrete pump and Fig. 4 shows the concrete flow moving in a direction parallel to that as it exits the concrete pump.

Preferably, elbows 20 and 26 are lined with a wear resistant material 34 such as chromium carbide to withstand the abrasiveness of flowing concrete.

It is recognized that other equivalents, alternatives, and modifications aside from those expressly stated, are possible and within the scope of the appended claims.

## Claims

1. A method for adapting a boom concrete pumping system of type having a tangent assembly connected to a concrete delivering outlet into a line concrete pumping system comprising:
removing the tangent assembly from the outlet;
attaching a first substantially ninety degree elbow having first and second ends to the outlet so that the concrete flow is directed downwardly from the outlet;
pivotally attaching a second substantially ninety degree elbow having first and second ends to said first and second end first elbow so that the concrete flow direction can be selectively positioned in a horizontal plane; and
providing a reduced diameter at said second end of said second elbow.

2. A modular system for adapting a boom concrete system of the type having a concrete delivering outlet into a line concrete pumping system comprising:
a first substantially ninety degree elbow having first and second ends connected to the outlet so that the concrete flow is directed downwardly from the outlet; and
a second substantially ninety degree elbow having first and second ends pivotally attached by said first end to said first elbow second end so that the concrete flow direction can be selectively positioned in a horizontal plane, said second elbow having a reduced diameter at said second end.

3. The modular system of claim 2, wherein interior surfaces of the first and second elbows are lined with chromium carbide.

4. The modular system of claim 2, wherein the second end of first elbow is pivotally attached to the first end of second elbow by a first clamp which allows for 360° rotation of the second elbow relative to the first elbow.

5. The modular system of claim 2, wherein the first end of the first elbow is non-rotatably joined to the outlet.

6. The modular system of claim 2, wherein the second end of the second elbow is pivotally attached by a second clamp to one end of an elongated pipe connected to a source of concrete.
